(19) Europäisches Patentamt
European Patent Office
Office européen des brevets

(11) **EP 2 683 843 B1**

(12) **EUROPÄISCHE PATENTSCHRIFT**

(45) Veröffentlichungstag und Bekanntmachung des Hinweises auf die Patenterteilung:
**16.06.2021  Patentblatt 2021/24**

(21) Anmeldenummer: **12709827.5**

(22) Anmeldetag: **08.03.2012**

(51) Int Cl.:
*C10M 111/00* (2006.01)  *C23C 2/26* (2006.01)
*B32B 15/01* (2006.01)  *C23C 2/06* (2006.01)
*C21D 1/673* (2006.01)  *C23C 28/00* (2006.01)
*C21D 7/13* (2006.01)  *C21D 9/48* (2006.01)
*C22C 38/04* (2006.01)  *C21D 8/02* (2006.01)
*C25D 3/56* (2006.01)  *C25D 5/48* (2006.01)

(86) Internationale Anmeldenummer:
**PCT/EP2012/054013**

(87) Internationale Veröffentlichungsnummer:
**WO 2012/120081 (13.09.2012 Gazette 2012/37)**

(54) **STAHLFLACHPRODUKT UND VERFAHREN ZUM HERSTELLEN EINES STAHLFLACHPRODUKTS**

FLAT STEEL PRODUCT AND METHOD FOR PRODUCING A FLAT STEEL PRODUCT

PRODUIT PLAT EN ACIER ET PROCÉDÉ DE FABRICATION D'UN PRODUIT PLAT EN ACIER

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.03.2011  DE 102011001140**

(43) Veröffentlichungstag der Anmeldung:
**15.01.2014  Patentblatt 2014/03**

(73) Patentinhaber: **ThyssenKrupp Steel Europe AG 47166 Duisburg (DE)**

(72) Erfinder:
• **BANIK, Janko**
  **58762 Altena (DE)**
• **BLUMENAU, Marc**
  **58119 Hagen (DE)**
• **KÖYER, Maria**
  **44143 Dortmund (DE)**
• **LEWE, Tobias**
  **48145 Münster (DE)**
• **SCHROOTEN, Axel**
  **44143 Dortmund (DE)**

(74) Vertreter: **Cohausz & Florack Patent- & Rechtsanwälte Partnerschaftsgesellschaft mbB Bleichstraße 14 40211 Düsseldorf (DE)**

(56) Entgegenhaltungen:
EP-A1- 1 439 240          EP-A1- 1 451 383
WO-A2-2007/076769    JP-A- S6 411 983
JP-A- H04 176 878

EP 2 683 843 B1

**Beschreibung**

Die Erfindung betrifft ein Stahlflachprodukt, das für eine Wärmebehandlung vorgesehen ist. Bei der Wärmebehandlung handelt es sich beispielsweise um eine Erwärmung auf eine Umformtemperatur, ausgehend von der das Stahlflachprodukt zu einem Bauteil warmgeformt wird. Die Warmformgebung kann dabei als Warmpressformen durchgeführt werden, bei dem das Stahlflachprodukt auf eine für die Bildung von Härtegefüge ausreichend hohe Temperatur erwärmt, anschließend verformt und dann so schnell abgekühlt wird, dass sich das festigkeitssteigernde Härtegefüge bildet.

Darüber hinaus betrifft die Erfindung ein Verfahren zum Herstellen eines derartigen Stahlflachproduktes.

Wenn hier von "Stahlflachprodukten" die Rede ist, so sind damit Stahlbänder, Stahlbleche oder daraus gewonnene Platinen und desgleichen gemeint.

Die mechanischen Eigenschaften von Stahlflachprodukten lassen sich durch unterschiedlichste Wärmebehandlungen beeinflussen. Ebenso lassen sich Stahlflachprodukte abhängig von ihrer Festigkeit, ihrem Verformungsverhalten oder ihrer Dicke nur im warmen Zustand zu Bauteilen verformen. Für die Wärmebehandlung oder Warmformung ist es dabei in der Regel erforderlich, das zu behandelnde oder zu verformende Stahlflachprodukt von einer niedrigen Ausgangstemperatur auf eine für die Wärmebehandlung oder Warmformgebung benötigte, deutlich höhere Temperatur zu erwärmen. Unter dem Gesichtspunkt der optimalen Energienutzung, der minimierten Prozessdauer und der optimierten Möglichkeiten der Prozesssteuerung besteht hier die Forderung nach einer möglichst wirkungsvollen Übertragung der in der Regel als Wärmestrahlung eingebrachten Wärmeenergie in das Stahlflachprodukt.

Ein Beispiel für ein Verfahren, bei dem es auf eine hohe Wirksamkeit des Wärmeeintrags in das jeweils zu erwärmende Stahlflachprodukt ankommt, ist das Warmpressformen.

Um beispielsweise die im modernen Karosseriebau geforderte Kombination aus geringem Gewicht, maximaler Festigkeit und Schutzwirkung zu bieten, werden heutzutage in solchen Bereichen der Karosserie, die im Fall eines Crashs besonders hohen Belastungen ausgesetzt sein können, aus hochfesten Stählen warmpressgeformte und gehärtete Bauteile eingesetzt.

Beim Warmpresshärten werden Stahlplatinen, die von kalt- oder warmgewalztem Stahlband abgeteilt sind, auf eine in der Regel oberhalb der Austenitisierungstemperatur des jeweiligen Stahls liegende Verformungstemperatur erwärmt und im erwärmten Zustand in das Werkzeug einer Umformpresse gelegt. Im Zuge der anschließend durchgeführten Umformung erfährt der Blechzuschnitt bzw. das aus ihm geformte Bauteil durch den Kontakt mit dem kühlen Werkzeug eine schnelle Abkühlung. Die Abkühlraten sind dabei so eingestellt, dass sich im Bauteil Härtegefüge ergibt.

Ein typisches Beispiel für einen für das Warmpresshärten geeigneten Stahl ist unter der Bezeichnung "22MnB5" bekannt und im Stahlschlüssel 2004 unter der Werkstoffnummer 1.5528 zu finden.

Den Vorteilen der bekannten für das Warmpresshärten besonders geeigneten MnB-Stähle steht in der Praxis der Nachteil gegenüber, dass manganhaltige Stähle im Allgemeinen anfällig für korrosive Angriffe und nur schwer zu passivieren sind.

Um die Korrosionsbeständigkeit von Mn-haltigen Stählen der in Rede stehenden Art zu verbessern, ist in der EP 1 143 029 B1 vorgeschlagen worden, ein für das Warmpressformen bestimmtes Stahlblech zunächst mit einem Zink-Überzug zu versehen und es dann vor der Warmverformung derart zu erwärmen, dass sich bei der Erwärmung auf dem Stahlflachprodukt durch eine Transformation der Beschichtung auf dem Stahlblech eine intermetallische Verbindung einstellt. Diese Verbindung soll das Stahlblech gegen Korrosion sowie Entkohlung schützen und während der Warmformgebung im Presswerkzeug eine Schmierfunktion übernehmen.

Neben Korrosionsschutzüberzügen aus Zink ("Z-Beschichtung") oder einer Zinklegierung (z.B. Zinkaluminium- ("ZA-Beschichtungen") mit bis zu 5 Gew.-% Al, Zinkeisen- ("ZF-Beschichtungen") mit bis zu 15 Gew.-% Fe, insbesondere mindestens 8 Gew.-% Fe, Zinknickel- ("ZN-Beschichtungen") mit bis zu 12 Gew.-% Ni, insbesondere mindestens 8 Gew.-% Ni, oder Zinkmagnesium-Beschichtungen ("ZM-Beschichtungen") mit bis zu 5 Gew.-% Mg, insbesondere mindestens 0,5 Gew.-% Mg, sowie bis zu 3 Gew.-% Al, insbesondere mindestens 0,2 Gew.-% Al) werden in der Praxis korrosionsempfindliche, für ein Warmpressformhärten vorgesehene Stahlflachprodukte auch mit einer AlSi-Schicht ("AS-Beschichtungen") mit bis zu 12 Gew.-% Si, insbesondere mindestens 8 Gew.-% Si, oder einer AlZn-Schicht ("AZ-Beschichtungen") mit bis zu 49 Gew.-% Zn und optional bis zu 2 Gew.-% Si, insbesondere bis zu 43,4 Gew.-% und bis zu 1,6 Gew.-% Si, versehen. Ebenso kommen Zinkaluminiumschichten ("ZA-Beschichtungen") mit bis zu 5 Gew.-% Al als metallische Korrosionsschutzschichten zum Einsatz. AS-Beschichtungen der voranstehend genannten Art weisen hier typischerweise bis zu 10 Gew.-% Si auf. Dabei lassen sich die voranstehend genannten Beschichtungen besonders wirtschaftlich durch Schmelztauchbeschichten auf das jeweilige Stahlsubstrat auftragen (DE 10 2006 053 819 A1).

Für das Warmpressformhärten müssen die so beschichteten Stahlflachprodukte mit einer bestimmten Geschwindigkeit auf eine Solltemperatur gebracht werden, ausgehend von der sie anschließend warmpressverformt werden. In der Praxis ergibt sich dabei das Problem, dass die Strahlungswärme an den glatten und spiegelnden Oberflächen der jeweils auf das Stahlflachprodukt aufgetragenen metallischen Korrosionsschutzbeschichtung reflektiert wird. Dies führt zu einer deutliche Verzögerung des Erwärmungsvorgangs mit der Folge, dass ein höherer Zeit- und Energieaufwand für die Erwärmung erforderlich ist. Darüber hinaus ergeben sich insbesondere bei Schutzüberzügen mit höheren Al-Gehalten durch Reaktion des Überzugs mit den keramischen Ofenrollen Anhaftungen an den Ofenrollen. Durch Eindiffusion von metallischem Al besteht die Gefahr, dass Ofenrollen aufgrund thermischer Dilatation des eingedrungenen Metalls brechen. Schließlich können sich Abrieb, Ablagerungen und Anhaftungen des Materials des Schutzüberzugs an der Oberfläche des jeweils eingesetzten Umformwerkzeuges ergeben. Auch diese Gefahr besteht insbesondere dann, wenn der auf dem Stahlflachprodukt vorhandene Korrosionsschutzüberzug hohe Gehalte an Al aufweist.

Aus der DE 10 2008 027 460 A1 ist ein Verfahren zum Herstellen eines gehärteten Stahlblechbauteils mit Bereichen unterschiedlicher Duktilität bekannt, bei dem das Verhalten des Stahlblechs beim Erwärmen derart geändert wird, dass das Wärmeaufnahmevermögen des Stahlblechs während des Aufheizens zum Härten abhängig vom gewünschten Härtegrad beeinflusst wird. Dazu wird für hohe Härtegrade ein gutes Wärmeaufnahmeverhalten und für weniger harte Bereiche ein verringertes Wärmeaufnahmeverhalten realisiert. Auf diese Weise soll das Gefüge über die Fläche des Bauteils bzw. über die Fläche der Platine variabel gestaltet werden können, wobei die Einstellung des Gefüges und die Einstellung des Wärmeaufnahmeverhaltens über die Oberflächenemissivität gesteuert wird. Das bekannte Verfahren hat somit die Einstellung lokal unterschiedlicher Härtegrade beim Abschreckhärten aus der Austenitphase zum Ziel und sieht dazu vor, die "Oberflächenemissivität", d. h. das Abstrahlvermögen der Oberfläche bzw. des Absorptionsgrades in lokal beschränkten Bereichen zu verändern. Diese Veränderung soll dabei bei metallischen Beschichtungen mit Zink oder auf Basis von Zink dadurch erzielt werden, dass die Dicke der Beschichtung in Abhängigkeit von der jeweils angestrebten Oberflächenemissivität eingestellt wird. So wird in den Bereichen, die stärker erwärmt werden sollen, eine dünnere Schichtdicke eingestellt, um dort in Folge einer erhöhten Durchlegierung mit dem Stahlsubstrat des Stahlflachprodukts eine dunklere, die Wärmestrahlung besser absorbierende Färbung und damit einhergehend eine höhere Oberflächenemissivität der Beschichtung zu erhalten. Höhere Zinkauflagendicken sollen dagegen zu einer geringeren Verfärbung und damit einhergehend zu einer niedrigeren Oberflächenemissivität und entsprechend weniger starken Erwärmung führen.

Neben dem voranstehend erläuterten Stand der Technik sind aus der EP 1 439 240 A1, der WO 2007/076769 A2 und der EP 1 451 383 A1 jeweils Beschichtungen bekannt, die Zn-Oxide beinhalten.

Dabei beschäftigt sich die EP 1 439 240 A1 nicht mit dem Problem einer besonders effektiven Erwärmung des Stahlflachprodukts. Vielmehr wird hier nur auf die Verbesserung der Verformbarkeit des Stahlflachprodukts beim Heißpressformen abgestellt.

Die WO 2007/076769 A2 zielt auf eine Verbesserung des Korrosionsschutzes und des tribologischen Verhaltens von Stahlflachprodukten ab und schlägt dazu vor, auf die Stahlflachprodukte eine Schmierschicht aufzutragen, die Verbindungen verschiedener Elemente aufweisen kann. Auf das Problem der Wärmeabsorbtion beim Erwärmen für ein Warmpressformen wird dabei nicht eingegangen.

Aus der EP 1 451 383 A1 war darüber hinaus ein mit einer Zn-Beschichtung belegtes Stahlblech bekannt, auf das eine dünne Schicht aufgebracht ist, die Si-, Ti-, Zr-, Al-, Ce-, Y-, Zn- oder Sb-Oxide als Nanopartikel enthält. Ziel der gemäß diesem Stand der Technik vorgenommenen Beschichtung ist die Verbesserung der Korrosionsbeständigkeit des entsprechend beschichteten Blechs. Das Problem einer Optimierung des Wärmeabsorptionsvermögens ist auch bei diesem Stand der Technik nicht adressiert worden.

Der aus JP S64 11983 A und aus der JP H04 176878 A bekannte Stand der Technik beschäftigt sich jeweils mit der Verbesserung des tribologischen Verhaltens von mit einer Schutzschicht auf Zn-Basis versehenen Stahlflachprodukten. Hierzu wird beim Stand der Technik gemäß der JP S64 11983 A eine Deckschicht auf die Zn-Schutzbeschichtung aufgebracht, die Oxide von Zr, Cr, Al, Y, Ce oder Sb enthalten kann. Beim Stand der Technik gemäß der JP H04 176868 A wird auf die Zn-Schutzbeschichtung ein Film aufgebracht, der aus Oxiden oder Hydroxiden von Mn, Mo, Co, Ni, Ca, Cr, V, W, Ti, Al oder Zn bestehen kann.

Vor dem Hintergrund des voranstehend erläuterten Standes der Technik bestand die Aufgabe der Erfindung darin, ein Stahlflachprodukt zu schaffen, dass sich innerhalb verkürzter Erwärmungszeiten auf die für die jeweilige Wärmebehandlung erforderliche Ausgangstemperatur bringen lässt. Darüber hinaus sollte ein Verfahren, das die Herstellung eines solchen Stahlflachproduktes erlaubt angegeben werden.

In Bezug auf das Stahlflachprodukt ist diese Aufgabe erfindungsgemäß dadurch gelöst worden, dass es die in Anspruch 1 angegebenen Merkmale aufweist.

Ein Verfahren zur Herstellung eines erfindungsgemäßen Stahlflachprodukts umfasst erfindungsgemäß die in Anspruch 3 angegebenen Maßnahmen.

Vorteilhafte Ausgestaltungen und Varianten der Erfindung sind in den abhängigen Ansprüchen angegeben und werden nachfolgend wie der allgemeine Erfindungsgedanke im Einzelnen erläutert.

Erfindungsgemäß ist ein für eine Wärmebehandlung vorgesehenes Stahlflachprodukt zusätzlich auf mindestens einer seiner freien Oberflächen mit einer separaten Deckschicht belegt, die eine Oxid-, Nitrid-, Sulfid-, Sulfat-, Carbid-, Carbonat-, Fluorid-, Hydrat-, Hydroxid- oder Phosphat-Verbindung eines unedlen Metalls enthält.

Praktische Versuche haben gezeigt, dass die nachfolgend im Einzelnen erläuterten Vorteile der Erfindung sich bereits bei Stahlflachprodukten einstellen, bei denen die Deckschicht unmittelbar auf die Oberfläche des Stahlsubstrats aufgebracht wird, bei denen also keine weiteren Beschichtungen auf dem Stahlflachprodukt vorhanden sind.

Besonders vorteilhaft erweist sich der Auftrag einer erfindungsgemäßen Deckschicht jedoch bei Stahlflachprodukten, die eine aus Stahl bestehende Grundschicht und eine auf die Grundschicht aufgetragene, vor Korrosion schützende metallische Schutzschicht umfassen. Dabei ist in diesem Fall die erfindungsgemäße Deckschicht auf die Schutzschicht aufgetragen, so dass die Deckschicht den auf der Grundschicht ausgebildeten Schichtaufbau auf seiner außen liegenden Seite abschließt.

Ebenso lässt sich aber auch bei Stahlflachprodukten, bei denen die Grundschicht mit einer nicht-metallischen Schicht beschichtet ist, durch den Auftrag einer erfindungsgemäßen Deckschicht eine deutliche Verbesserung des Erwärmungsverhaltens erzielen. Zu diesen auf die Grundschicht aufgetragenen nicht-metallischen Schichten zählen beispielsweise temperaturstabile, abreagierte organische Verbindungen, wie Ruß, sowie Na- oder Cabasierte Salze, Nitrate und Phosphate , wie $NaCl$, $Na_2O$, $KNO_3$, $K_3PO_4$, $K_2SO_4$, $K_2S$, $K_2CO_3$, die jeweils einen hohen Schmelz- bzw. Siedepunkt besitzen.

Gemäß der Erfindung ist dementsprechend in einem separaten Arbeitsgang und losgelöst von den anderen optional auf dem erfindungsgemäßen Stahlflachprodukt vorhandenen Beschichtungen eine Deckschicht aufgetragen. Diese Deckschicht bewirkt zum einen, dass das Reflektionsvermögen des Stahlflachprodukts, insbesondere des optional auf dem Stahlflachprodukt vorhandenen Überzugs herabgesetzt wird. Die Oberfläche eines in erfindungsgemäßer Weise beschichteten Stahlflachprodukts wirkt in der Regel matter und zeichnet sich durch eine erhöhte Absorptionsfähigkeit für Infrarotstrahlung aus.

So werden mit einer erfindungsgemäßen Deckschicht Absorptionsgrade (die Begriffe "Absorptionsgrad" und "Absorptionskoeffizient" werden hier synonym gebraucht) erreicht, die im Bereich von 0,3 - 0,99 % liegen. Dementsprechend nehmen mit einer erfindungsgemäßen Deckschicht beschichtete Stahlflachprodukte 30 - 99 % der auf sie treffenden Wärmestrahlung auf.

Dabei hat sich gezeigt, dass die erfindungsgemäß in der Deckschicht vorhandene, aus der Gruppe der Oxid-, Nitrid-, Sulfid-, Sulfat-, Carbid-, Carbonat-, Fluorid-, Hydrat-, Hydroxid- oder Phosphat-Verbindung stammende metallische Verbindung im für Wärmebehandlungen von Stählen typischen Temperaturbereich von 300 - 1200 °C temperaturstabil und so auch bei hohen, mindestens der Ar3-Temperatur entsprechenden Temperaturen, wie sie beispielsweise für das Warmpressformen in der Regel benötigt werden, eine hocheffektive Erwärmung ermöglichen.

Zum anderen wirkt die erfindungsgemäß auf einem Stahlflachprodukt der voranstehend erläuterten Art vorgesehene Deckschicht nach Art eines Schmierstoffs und verbessert so die Eignung erfindungsgemäßer Stahlflachprodukte zur Umformung zu einem Bauteil durch Warmpressformen.

Gleichzeitig verhindert die Deckschicht nach Art einer Barriere einen direkten Kontakt zwischen dem Stahlflachprodukt und den Rollen oder anderen Bauelementen des zur Erwärmung des Stahlflachprodukts eingesetzten Ofens. Dies erweist sich als besonders vorteilhaft, wenn das erfindungsgemäße Stahlflachprodukt mit einer Korrosionsschutzschicht belegt ist, die in Folge der Erwärmung anschmelzen kann. Bei derart beschichteten Stahlflachprodukten kann die erfindungsgemäß aufgetragene Deckschicht verhindern, dass Anhaftungen im Erwärmungsofen im für eine optional durchgeführte Warmformgebung eingesetzten Umformwerkzeug entstehen. Infolgedessen ist bei einem erfindungsgemäßen Stahlflachprodukt nicht nur die Zeit, innerhalb der die Erwärmung auf die jeweilige Ausgangstemperatur der Warmformgebung erfolgt, deutlich verkürzt, sondern auch die Gefahr der Beschädigung von Bauteilen des Erwärmungsofens oder des für die optionale Warmformung eingesetzten Umformwerkzeugs ebenso deutlich reduziert.

Die erfindungsgemäße Vorgabe, dass eine aus der Gruppe der Oxid-, Nitrid-, Sulfid-, Sulfat-, Carbid-, Carbonat-, Fluorid-, Hydrat-, Hydroxid- oder Phosphat-Verbindung stammende metallische Verbindung in der erfindungsgemäß aufgebrachten Deckschicht vorhanden sein soll, schließt selbstverständlich ein, dass die Deckschicht auch mehrere solcher Verbindungen enthält. Dementsprechend können in einer erfindungsgemäß aufgebrachten Deckschicht auch Mischungen solcher Verbindungen vorhanden sein. Bei der praktischen Erprobung der Erfindung hat sich allerdings herausgestellt, dass bereits bei Anwesenheit einer einzigen der genannten Verbindungen in der Deckschicht die erfindungsgemäß angestrebten Effekte sicher erreicht werden.

Die positiven Wirkungen der erfindungsgemäßen Deckschicht treten unabhängig von der Legierung ihres Grundwerkstoffs bei allen Stahlflachprodukten ein.

Dies gilt insbesondere dann, wenn das Stahlflachprodukt mit einer metallischen Korrosionsschutzschicht belegt ist, auf deren Außenseite wiederum die Deckschicht aufgetragen ist. Praktische Versuche haben hier gezeigt, dass bei Stahlflachprodukten, deren Korrosionsschutzbeschichtung auf Aluminium basiert, die Erwärmungszeiten deutlich vermindert werden konnten.

In Tabelle 1 ist für verschiedene Korrosionsschutzüberzüge der Anteil in "%" angegeben, um den sich die Erwärmungszeiten bei einem erfindungsgemäß beschichteten Stahlflachprodukt gegenüber einem Stahlflachprodukt verkürzen, das ohne Deckschicht auf die jeweils erforderliche Ausgangstemperatur für eine Warmpressformung erwärmt wird. Die Dicke der bereits getrockneten Deckschicht liegt dabei jeweils im optimalen Bereich von 0,1 - 0,3 $\mu$m.

Jedoch wird bei derart beschichteten Stahlflachprodukten durch die Erfindung nicht nur eine Verkürzung der erforderlichen Aufheizzeiten, sondern auch eine deutliche Verminderung der Entstehung von Anhaftungen und die Verbesserung des Umformverhaltens im Umformwerkzeug erzielt.

Die in einer erfindungsgemäß vorgesehenen Deckschicht vorhandenen Substanzen sind temperaturresistent und besitzen bei Temperaturen bis zu 1200 °C ein nur sehr geringes oder sogar kein Reaktionsvermögen, zeichnen sich jedoch durch ein hohes Absorptionsvermögen im hier interessierenden Wellenlängenbereich der Wärmestrahlung aus. Konkret in Betracht kommen aus unedlen Metallen gebildete, anorganische Salze (in Form von Oxiden, Sulfiden, Sulfaten, Fluoriden und Phosphaten) oder salzartige Substanzen wie ionische Carbide, Carbonate oder Nitride. Die typische Partikelgröße dieser Substanzen trägt zur angestrebten, das Absorptionsvermögen steigernden Erhöhung der Oberflächenrauhigkeit der Beschichtung bei.

Unter die unedlen Metalle, aus denen die Oxid-, Nitrid-, Sulfat-, Sulfid-, Carbid-, Carbonat-, Fluorid-, Hydrat-, Hydroxid- oder Phosphat-Verbindungen der erfindungsgemäß auf das optional mit einer Korrosionsschutzschicht belegte Stahlflachprodukt aufgetragene Deckschicht gebildet sind, fallen nach dem Verständnis der Erfindung alle Metalle, die bereits unter Normalbedingungen mit dem Sauerstoff der Atmosphäre reagieren. Darüber hinaus umfassen die unedlen Metalle hier auch die Erdalkalimetalle, die Alkalimetalle und die Halbmetalle, auch Metalloide genannt, sowie die Übergangsmetalle.

Die Metalle, aus denen die in der erfindungsgemäßen Deckschicht jeweils vorhandenen Verbindungen gebildet sind, sind Na, K, Mg, B, Mn.

Die aus Stahl bestehende Grundschicht eines erfindungsgemäß beschaffenen Stahlflachprodukts besteht beispielsweise aus mit Mn legierten Stählen, wie sie im Stand der Technik bereits in verschiedenen Ausführungen für das Warmpressformen vorgesehen und wie eingangs erwähnt am Beispiel des bekannten Stahls 22MnB5 erläutert worden sind. Solche Stähle weisen typischerweise 0,1 - 3 Gew.-% Mn sowie Gehalte an B auf, um das von ihnen geforderte Festigkeitsniveau zu erreichen. Stahlflachprodukte, die aus solchen Stählen hergestellt sind, sind in der Regel hoch korrosionsempfindlich und werden daher üblicherweise mit einer Zn- oder Al-basierten metallischen Schutzschicht belegt, die sie vor Korrosion schützen soll. Gerade bei einer Warmpressformgebung von solchen Stahlflachprodukten, bei denen auf eine aus Stahl bestehende Grundschicht des Stahlflachprodukts eine vor Korrosion schützende Schutzschicht aufgetragen ist, auf der die Deckschicht liegt, erweist sich die erfindungsgemäße Deckschicht als besonders wirkungsvoll.

Es konnte zudem nachgewiesen werden, dass sich beim Warmpressformen von Stahlflachprodukten, die mit einer Zn- oder Al-basierten metallischen Schutzschicht und in erfindungsgemäßer Weise mit einer darauf liegenden Deckschicht versehen sind, ca. 80 % weniger Risse gebildet haben, als bei Vergleichsprodukten, die zwar mit derselben Schutzschicht versehen waren, jedoch ohne erfindungsgemäße Deckschicht warmpressgeformt worden sind.

Unter die in einer erfindungsgemäß vorgesehenen Deckschicht vorhandenen Verbindungen fallen beispielsweise Verbindungen der Erdalkalimetalle, wie $Mg_3Si_4O_{10}(OH)_2$ oder MgO, Alkalimetall-Verbindungen, $K_2CO_3$ oder $Na_2Ca_3$, NaOH, $Na_2CO_3$ Verbindungen der Halbmetalle, wie BN und Verbindungen der Übergangsmetalle, wie $Mn_2O_3$.

Eine erfindungsgemäße Deckschicht führt zu einer entscheidenden Verbesserung des Wärmeabsorptionsvermögens und zu einer deutlichen Verminderung der Reibung während der Umformung eines erfindungsgemäßen Stahlflachprodukts im jeweiligen formgebenden Werkzeug. Dies gilt insbesondere dadurch, dass die in der Deckschicht erfindungsgemäß vorgesehenen Metall-Verbindungen partikelförmig aufgetragen sind, wobei dies die Möglichkeit einschließt, dass die Partikel gemeinsam eine dichte, kompakte Deckschicht bilden. Im Fall, dass der mittlere Durchmesser der Partikel der mindestens einen in der erfindungsgemäßen Deckschicht vorhandenen Verbindungen größer ist als die mittlere Dicke der Deckschicht, stellt sich dabei eine für die hier angestrebten Effekte besonders vorteilhafte Rauhigkeit ein. So ergeben sich bei der Verformung eines erfindungsgemäßen Stahlflachprodukts dadurch gute Arbeitsergebnisse, dass der mittlere Durchmesser der Partikel der in der erfindungsgemäßen Deckschicht vorhandenen Verbindung im Bereich von 0,01 - 0,3 $\mu$m liegt.

Der besondere Vorteil der erfindungsgemäß vorgegebenen Zusammensetzung der Deckschicht besteht in dieser Hinsicht darin, dass sie auch bei den hohen Temperaturen, bei denen die Wärmebehandlung bzw. die Warmformgebung eines erfindungsgemäß beschichteten Stahlflachprodukts stattfindet, sicher ihre Wirkung entfaltet. Ohne dass es dazu besonderer Maßnahmen bedarf, haftet die erfindungsgemäß aufgebrachte Deckschicht so fest auf dem jeweiligen Stahlsubstrat, dass sich sowohl in dem für die Erwärmung der Platinen eingesetzten Ofen als auch im für die optionale Warmformung eingesetzten Umformwerkzeug nur minimierter Abrieb und geringfügige Anhaftungen ergeben.

Letzteres erweist sich insbesondere auch dann als vorteilhaft, wenn ein erfindungsgemäß beschichtetes Stahlflachprodukt in einem Durchlaufofen auf die Umformtemperatur erwärmt wird und dabei auf rotierenden Ofenrollen voran bewegt wird. Die erfindungsgemäß zusammengesetzte Deckschicht eines erfindungsgemäßen Stahlflachprodukts bleibt hier allenfalls in geringen Mengen an den Ofenrollen haften, so dass der Verschleiß der Rollen und der für ihre Wartung erforderliche Aufwand minimiert sind.

Praktische Untersuchungen haben in diesem Zusammenhang ergeben, dass die erfindungsgemäß zusammengesetzte Deckschicht auch nach einer direkten Temperaturbeanspruchung im für eine Warmpressformgebung typischen Temperaturbereich von 300 - 1200 °C, insbesondere von 700 - 1000 °C, weiter bevorzugt von 800 bis 950 °C, über eine ausreichend lange Zeit alle von ihr geforderten Eigenschaften beibehält, insbesondere auch bei den hohen Temperaturen so lange stabil bleibt, bis die Umformung des jeweiligen erfindungsgemäß beschichteten Stahlflachprodukts abgeschlossen ist.

Dabei beeinflusst die erfindungsgemäße Deckschicht zudem die gewünschte Oxidschichtbildung eines optional auf dem Stahlflachprodukt vorhandenen metallischen Schutzüberzugs während der Aufheizphase für die Warmformgebung nicht nachteilig. Auch ergeben sich durch die Anwesenheit der erfindungsgemäßen Deckschicht keine Nachteile bei der Weiterverarbeitung. Insbesondere behindert die erfindungsgemäße Deckschicht die Eignung zum Verschweißen, zum Verkleben, zum Lackieren oder für den Auftrag anderer Beschichtungen nicht. Dementsprechend besteht auch keine Notwendigkeit, die erfindungsgemäße Deckschicht zwischen dem Warmpressformen und den anschließend an dem jeweils erhaltenen Bauteil vorgenommenen Arbeitsschritten zu entfernen.

Die erfindungsgemäß aufgetragene Deckschicht überbrückt die erheblichen Grundrauhigkeiten, die sich im Zuge der Erwärmung für das anschließende Warmpressformen an der jeweiligen Oberfläche des Stahlflachprodukts bilden. Praktische Versuche haben in dieser Hinsicht ergeben, dass die erfindungsgemäß aufgebrachte Deckschicht möglichst dünn sein sollte. Bei Versuchen wurde herausgefunden, dass hierzu bereits eine relativ dünne Schicht von weniger als 0,5 $\mu$m, optimalerweise von 0,1 - 0,3 $\mu$m, ausreicht, um einen vollständigen Wärmeübertrag aus der Deckschicht in den Grundwerkstoff des Stahlflachprodukts zu bewirken.

Dabei hat sich gezeigt, dass die erzielbare Erhöhung der Aufheizrate und die damit einhergehende Verkürzung der Aufheizzeit für ein gegebenes Deckschichtmaterial weitestgehend unabhängig von der jeweiligen Schichtdicke ist. Eine besonders dünne Deckschicht hat hierbei allerdings den Vorteil, dass der chemische/mechanische Einfluss der Deckschicht auf den Grundwerkstoff und die optional zwischen der Deckschicht und dem Grundwerkstoff liegende Korrosionsschutzschicht minimal ist.

Insbesondere soll das Belegungsgewicht, mit der die erfindungsgemäße Deckschicht auf dem Stahlflachprodukt aufgetragen ist, am fertigen Produkt 0,01 - 15 g/m$^2$, insbesondere bis zu 5 g/m$^2$, betragen, wobei insbesondere die Erhöhung der Wärmeabsorption bereits bei Belegungsgewichten von weniger als 1 g/m$^2$ eintritt. Optimale Wirkungen der erfindungsgemäßen Deckschicht sind dabei zu erwarten, wenn das Belegungsgewicht 0,02 - 1 g/m$^2$ beträgt. Einerseits ist bei einer derartigen geringen Belegung auch der reibungsmindernde Effekt der Deckschicht im Umformwerkzeug nutzbar. Andererseits sind bei einer dünnen erfindungsgemäßen Deckschicht negative Einflüsse auf die Ergebnisse der bei der Weiterverarbeitung eines erfindungsgemäßen Stahlflachprodukts durchgeführten Arbeitsschritte besonders sicher ausgeschlossen.

Mit der Erfindung steht somit ein Stahlflachprodukt zur Verfügung, das sich nicht nur besonders schnell und energiesparend auf eine Zieltemperatur erwärmen lässt, sondern dass sich auch durch eine optimierte Umformbarkeit auszeichnet.

Gehalte von bis zu 15 Gew.-% Ruß oder Graphit in der Deckschicht können die Wärmeabsorptionsfähigkeit eines erfindungsgemäß beschichteten Stahlflachprodukts weiter steigern, ohne dass dadurch die anderen positiven Eigenschaften der Deckschicht und der optional vorhandenen Korrosionsschutzschicht beeinträchtigt werden.

Aus fertigungstechnischer Sicht besteht der entscheidende Vorteil einer erfindungsgemäßen Deckschicht darin, dass sich ihr Auftrag auf das Stahlflachprodukt, insbesondere die auf dem Stahlflachprodukt vorhandene metallische Schutzbeschichtung der aus Stahl bestehenden Grundschicht eines Stahlflachprodukts, problemlos in einen kontinuierlich ablaufenden Produktionsprozess einbinden lässt.

Das erfindungsgemäße Verfahren zum Herstellen eines gemäß einem der voranstehenden Ansprüche beschaffenen Stahlflachprodukts, umfasst demnach die im Anspruch 3 aufgeführten Arbeitsschritte.

Hier besteht eine für die Praxis besonders wichtige, zu einer deutlichen Minimierung der Prozesszeiten führende und eine optimale Ausnutzung der zur Verfügung stehenden Ressourcen ermöglichende Variante der Erfindung darin, dass die Applizierung der Deckschicht direkt vor dem Erwärmungsprozess stattfindet, in dem das Stahlflachprodukt auf die für die Wärmebehandlung jeweils erforderliche Temperatur gebracht wird.

Die für die erfindungsgemäße Beschichtung eines Stahlflachprodukts vorgesehenen Arbeitsschritte können beispielsweise in einer Feuerbeschichtungs-, elektrolytischen Beschichtungsanlage oder Bandbeschichtungsanlage im Anschluss an die zum Auftrag einer metallischen Schutzschicht erforderlichen Prozessschritte in einer Beschichtungseinrichtung vorgenommen werden, die in Linie zu den für den Auftrag der metallischen Schutzschicht erforderlichen Arbeitsstationen steht und in die das aus der letzten dieser Arbeitsstationen austretende Stahlflachprodukt in einem kontinuierlichen, unterbrechungsfreien Bewegungsablauf eintritt. Selbstverständlich kann die Deckschicht auch in einer separaten, kontinuierlich arbeitenden Anlage aufgebracht werden, die in eine Produktionsstrecke eingebunden ist, welche im kontinuierlichen Durchlauf vom jeweiligen Stahlflachprodukt durchlaufen wird.

Abhängig von der Menge an weiteren Bestandteilen der auf das Stahlflachprodukt, insbesondere die auf dem Stahlflachprodukt optional vorhandene Schutzschicht, aufgetragenen Beschichtungsflüssigkeit ergibt sich bei erfindungsgemäßer Vorgehensweise eine Deckschicht, die zu 20 - 98 Gew.-% aus der Oxid-, Nitrid-, Sulfat-, Sulfid-, Carbid-, Carbonat-, Fluorid-, Hydrat-, Hydroxid- oder Phosphat-Verbindung des jeweiligen unedlen Metalls und als Rest aus den jeweils anderen Komponenten besteht.

Während die in einer erfindungsgemäß aufgebrachten Beschichtungsflüssigkeit enthaltenen Verbindungen des jeweiligen unedlen Metalls den wesentlichen Beitrag zur Minimierung der während des Warmpressformens im Werkzeug vorhandenen Reibung leisten, stellt der in der Beschichtungsflüssigkeit zusätzlich vorhandene Binder die ausreichend feste Anbindung der durch die Beschichtungsflüssigkeit gebildeten Deckschicht an die metallische Schutzschicht des Stahlflachprodukts sicher. Hier haben sich Gehalte von 2 - 10 Gew.-% eines geeigneten Binders in der Beschichtungsflüssigkeit als ausreichend herausgestellt.

Bei dem betreffenden Binder kann es sich beispielsweise um einen organischen oder einen anorganischen Binder handeln, wie zum Beispiel um Wasserglas oder Cellulose. Der jeweilige Binder fixiert die erfindungsgemäß aufgetragene Beschichtung auf der Schutzschicht und verhindert, dass die erfindungsgemäß aufgetragene Beschichtung sich vor der Blechumformung ablöst.

Wird ein natürlicher oder künstlich erzeugter organischer Binder verwendet, so sollte dieser wasserlöslich und gut dispergierbar sein, um als Lösemittel der Beschichtungsflüssigkeit problemlos Wasser verwenden zu können. Beispiele für in Frage kommende organische Binder sind: Celluloseester, Cellulosenitrat, Celluloseacetobutyrat, Styrolakrylacetat, Polyvinylacetat, Polyacrylat, Siliconharz und Polyesterharz. Der organische Binder sollte dabei auch so ausgewählt werden, dass er im Zuge des Auftrags oder Trocknens der Beschichtungsflüssigkeit oder bei der für die Warmumformung vorgenommenen Erwärmung weitestgehend rückstandsfrei verbrennt. Dies hat den Vorteil, dass durch den Binder die Schweißbarkeit sicher nicht beeinträchtigt wird. Auch sollte der organische Binder keine Halogene wie Fluor, Chlor oder Brom enthalten, die beim Verbrennungsvorgang (Warmumformung) zur Abgabe gesundheitsschädlicher, explosiver oder ätzender Verbindungen führen.

Besonders gute Beschichtungsergebnisse ergeben sich auch, wenn ein anorganischer Binder verwendet wird. Diese anorganischen Binder verbleiben nach der Erwärmung und dem Presshärtevorgang auf dem Stahlflachprodukt, so dass sie regelmäßig auch in der Deckschicht des fertigen Produkts feststellbar sind. Typische Beispiele für anorganische Binder der in Rede stehenden Art sind Silizane, Kaliumsilikat ($K_2O-SiO_2$), Natriumsilikat ($Na_2O-SiO_2$), Kieselsäure ($H_2SiO_3$) oder $SiO_2$.

Als flüssiger Träger, d. h. Lösemittel, in dem die anderen Bestandteile der erfindungsgemäß aufgetragenen Beschichtungsflüssigkeit enthalten sind, dient Wasser, das während der Trocknung der Deckschicht problemlos verdunstet und als Wasserdampf ohne größeren Aufwand abgezogen und umweltschonend entsorgt werden kann. Der Wassergehalt einer erfindungsgemäß aufgetragenen Beschichtungsflüssigkeit beträgt dabei typischerweise 15 - 80 Gew.-%., insbesondere regelmäßig mehr als 50 Gew.-%.

Neben ihren Hauptbestandteilen "Oxid-, Nitrid-, Sulfid-, Sulfat-, Carbid-, Hydrat- oder Phosphat-Verbindung eines unedlen Metalls" und "Binder" kann die erfindungsgemäß auf das Stahlflachprodukt, insbesondere die auf ihm optional vorhandene metallische Korrosionsschutzschicht applizierte Beschichtungsflüssigkeit Bestandteile enthalten, die beispielsweise ihre Benetzungseigenschaften oder die Verteilung der in ihr erfindungsgemäß enthaltenen Verbindung verbessern.

Praktische Untersuchungen haben dabei gezeigt, dass sich optimale Beschichtungsergebnisse einstellen, wenn die Beschichtungsflüssigkeit 5 - 35 Gew.-% der Oxid-, Nitrid-, Sulfat-, Sulfid-, Carbid-, Carbonat-, Fluorid-, Hydrat-, Hydroxid- oder Phosphat-Verbindungskomponente enthält. Bei derart bemessenen Gehalten an der betreffenden VerbindungsKomponente der Beschichtungsflüssigkeit ergeben sich Deckschichten, die bis zu 94 Gew.-% aus der Oxid-, Nitrid-, Sulfid-, Sulfat-, Carbid-, Carbonat-, Fluorid-, Hydrat-, Hydroxid- oder Phosphat-Verbindung eines unedlen Metalls bestehen.

Im Hinblick auf eine Minimierung der Prozesszeiten und des Beschichtungsergebnisses wirkt es sich positiv aus, wenn die Temperatur der Beschichtungsflüssigkeit beim Auftragen 20 - 90 °C, insbesondere 40 - 70 °C, beträgt, wobei sich die Deckschicht besonders effektiv auftragen lässt, wenn die Beschichtungsflüssigkeit mindestens 60 °C warm ist. Demselben Zweck dient es, wenn die Temperatur des Stahlflachprodukts beim Auftragen der Beschichtungsflüssigkeit 5 - 150 °C, insbesondere 40 - 120 °C, beträgt. Dabei kann im Fall, dass das Stahlflachprodukt mit einer auf seine Grundschicht aufgetragenen Korrosionsschutzschicht belegt werden soll, die für den Arbeitsschritt "Auftragen der Deckschicht" gewünschte Temperatur des Stahlflachprodukts bei geeignet enger Abfolge der Arbeitsschritte aus dem vorangehenden Arbeitsschritt "Auftragen der metallischen Schutzschicht" mitgenommen werden. Einer zusätzlichen Erwärmungseinrichtung bedarf es in diesem Fall nicht.

Alternativ ist es ebenso möglich, die erfindungsgemäße Deckschicht im Zuge eines vorbereitenden Arbeitsschritts vor der Wärmebehandlung, insbesondere vor einem Warmpressformen durchzuführen. Hierbei kann die für die Wärmebehandlung erforderliche Erwärmung dazu genutzt werden, die Deckschicht zu trocknen. Dies erweist sich insbesondere dann als vorteilhaft, wenn es sich bei der Wärmbehandlung um eine Erwärmung für eine Warmpressformgebung handelt.

Im Fall, dass das Stahlflachprodukt für eine Warmpressformung vorgesehen und mit einer Korrosionsschutzschicht belegt ist, kann es zweckmäßig sein, das Stahlflachprodukt nach der Beschichtung mit der Korrosionsschutzschicht zunächst zum Weiterverarbeiter zu transportieren und dort die Deckschicht kurz vor dem Eintritt des Stahlflachprodukts in den Warmumformofen aufzutragen, in dem das Stahlflachprodukt auf die für die Warmformgebung erforderliche Temperatur erwärmt wird.

Die Beschichtungsflüssigkeit kann durch Tauchen, Spritzen oder andere konventionelle Auftragsverfahren aufgebracht werden.

Die Einstellung der Schichtdicke auf die jeweils vorgegebene, im Bereich von 0,1 - 0,3 $\mu$m liegende Schichtdicke kann ebenfalls in konventioneller Weise durch Abquetschrollen, Abblasen überschüssiger Flüssigkeitsmengen, Variation des Feststoffanteils der Beschichtungsflüssigkeit oder Veränderung der Temperatur der Beschichtungsflüssigkeit erfolgen.

Die Trocknung der erfindungsgemäß applizierten Deckschicht erfolgt typischerweise bei 100 - 300 °C, wobei die typische Trocknungszeit im Bereich von 5 - 180 sec liegt. Sowohl die Trocknungstemperatur als auch die Trocknungszeiten sind dabei so bemessen, dass der Trocknungsvorgang problemlos in konventionellen Trocknungseinrichtungen absolviert werden kann, durch die das jeweilige Stahlflachprodukt im kontinuierlichen Durchlauf geleitet wird.

Das in erfindungsgemäßer Weise beschichtete Stahlband kann anschließend zu Coils gewickelt und zur Weiterverarbeitung transportiert werden. Die weiteren zur Erzeugung eines Bauteils aus dem erfindungsgemäßen Stahlflachprodukt erforderlichen Prozessschritte können örtlich und zeitlich getrennt beim Weiterverarbeiter durchgeführt werden.

Aufgrund der minimierten Reibung, die sich bei der Umformung beim Kontakt der in erfindungsgemäßer Weise mit einer Deckschicht versehenen Stahlflachprodukte mit dem Umformwerkzeug einstellt, lassen sich aus erfindungsgemäß beschichteten Stahlflachprodukten durch Warmpressformen rissfreie Bauteile fertigen, für deren Formgebung hohe Streckgrade oder komplex gestaltete Verformungen erforderlich sind. Zur Herstellung eines warmpressgeformten Bauteils kann hierzu aus einem mit einer Deckschicht der erfindungsgemäßen Art versehenen Stahlflachprodukt in an sich bekannter Weise beispielsweise durch Laserschneiden oder mit Hilfe einer anderen konventionellen Schneideinrichtung eine Platine geschnitten werden, die dann auf eine oberhalb von 700 °C liegende Umformtemperatur durcherwärmt wird und in einem Umformwerkzeug zu dem Bauteil umgeformt wird. In der Praxis liegen die typischen Umformtemperaturen im Bereich von 700 - 950 °C bei Erwärmungszeiten von 3 - 15 Minuten.

Die Anwesenheit der erfindungsgemäßen Deckschicht auf dem umzuformenden Stahlflachprodukt erlaubt jeweils eine optimal zeit- und energiesparende schnelle Erwärmung auf die jeweilige Solltemperatur. Im Fall der Verarbeitung eines Stahlflachprodukts, dessen Grundschicht aus einem 0,3 - 3 Gew.-% Mn enthaltenden Stahl gefertigt ist, ergeben sich optimale Arbeitsergebnisse beispielsweise dann, wenn die Platinen- bzw. Bauteiltemperatur maximal 920 °C, insbesondere 830 - 905 °C, beträgt. Dies gilt insbesondere dann, wenn das Formen des Stahlbauteils als Warmformgebung im Anschluss an die Erwärmung auf die Platinen- bzw. Bauteiltemperatur so durchgeführt wird, dass die erwärmte Platine ("direktes" Verfahren) bzw. das erwärmte Stahlbauteil ("indirektes" Verfahren) unter Inkaufnahme eines gewissen Temperaturverlustes in das jeweils anschließend genutzte Formwerkzeug gelegt wird. Besonders betriebssicher lässt sich die jeweils abschließende Warmformgebung dann durchführen, wenn die Platinen- bzw. Bauteiltemperatur beim Verlassen des jeweils verwendeten Erwärmungsofens 850 - 880 °C beträgt. Abhängig von den Transportwegen, Transportzeiten und Umgebungsbedingungen ist die Bauteiltemperatur im Werkzeug in der Praxis regelmäßig um 100 - 150 °C niedriger als die Temperatur beim Verlassen des Erwärmungsofens.

Das durch Umformen bei derart hohen Temperaturen erhaltene Bauteil kann in an sich bekannter Weise ausgehend von der jeweiligen Umformtemperatur beschleunigt abgekühlt werden, um in dem Bauteil Härtegefüge zu erzeugen und so eine optimale Belastbarkeit zu erzielen.

Die durch die erfindungsgemäß aufgebrachte Deckschicht verminderte Reibung im Umformwerkzeug macht ein erfindungsgemäßes Stahlflachprodukt dabei aufgrund der Unempfindlichkeit des in erfindungsgemäßer Weise beschichteten Stahlflachproduktes gegen Risse des Stahlsubstrats und Abrieb insbesondere für das einstufige Warmpressformen geeignet, bei dem eine Warmformgebung und die Abkühlung des Stahlbauteils unter Ausnutzung der Wärme der zuvor durchgeführten Erwärmung in einem Zuge in dem jeweiligen Umformwerkzeug durchgeführt werden.

Genauso positiv wirken sich die Eigenschaften eines erfindungsgemäß beschichteten Stahlflachprodukts selbstverständlich beim zweistufig erfolgenden Warmpresshärten aus. Bei dieser Verfahrensvariante wird zunächst die Platine gebildet und dann ohne zwischengeschaltete Wärmebehandlung aus dieser Platine das Stahlbauteil geformt. Das Formen des Stahlbauteils erfolgt dann typischerweise in einem Kaltformvorgang, bei dem eine oder mehrere Kaltumformoperationen durchgeführt werden. Der Grad der Kaltformgebung kann dabei so hoch sein, dass das erhaltene Stahlbauteil im Wesentlichen vollständig fertig ausgeformt ist. Jedoch ist es auch denkbar, die erste Formgebung als Vorformen durchzuführen und das Stahlbauteil nach dem Erwärmen in einem Formwerkzeug fertig zu formen. Dieses Fertigformen kann mit dem Härtevorgang kombiniert werden, indem das Härten als Formhärten in einem geeigneten Formwerkzeug durchgeführt wird. Dabei wird das Stahlbauteil in ein seine fertige Endform abbildendes Werkzeug gelegt und für die Ausbildung des gewünschten Härte- oder Vergütungsgefüges ausreichend schnell abgekühlt. Das Formhärten ermöglicht so eine besonders gute Formhaltigkeit des Stahlbauteils.

Unabhängig davon, welche der beiden Varianten des erfindungsgemäßen Verfahrens angewendet werden, müssen weder die Formgebung noch die zur Ausbildung des Härte- oder Vergütungsgefüges benötigte Abkühlung in besonderer, vom Stand der Technik abweichender Weise durchgeführt werden. Vielmehr können bekannte Verfahren und vorhandene Vorrichtungen für diesen Zweck eingesetzt werden.

Die erfindungsgemäß erhaltenen Bauteile können nachfolgend konventionellen Füge- und Beschichtungsprozessen unterzogen werden.

Im Zusammenhang mit Stahlflachprodukten, die mit einer Korrosionsschutzbeschichtung versehen sind, liegen der Erfindung folgende grundsätzliche Überlegungen zu Grunde:

Das Aufheizverhalten von Korrosionsschutzüberzügen, insbesondere von Überzügen des AS-Typs, ist im für die Warmumformung üblichen Temperaturbereich von 850 - 950 °C deutlich schlechter als das von unbeschichtetem, warmpressformhärtbarem Stahlblech, bei dem es sich typischerweise um ein aus einem borhaltigen Mn-Stahl gefertigtes Stahlblech handelt. Für elektromagnetische Wellen im Bereich von 1 $\mu$m liegt hier der Absorptionsfaktor bei maximal 0,3. Auch im für den Temperaturbereich von 900 °C zutreffenden Wellenlängenbereich von etwa 2 - 3 $\mu$m liegt das Absorptionsverhalten von AS noch deutlich unter dem von unbeschichtetem Stahl.

Das maximal mögliche Absorptionsverhalten mit einem Absorptionsfaktor von 1 wird durch das Modell des "schwarzen Körpers" beschrieben. Substanzen, die besonders im infraroten Bereich von 1 - 3 $\mu$m Wellenlänge viel Energie absorbieren können, müssen jedoch nicht zwingend schwarz sein.

Anzumerken ist hier, dass im Fall, dass das Stahlflachprodukt eine auf Al- oder Zn-basierende Korrosionsschutzschicht umfasst und nicht in erfindungsgemäßer Weise mit einer Deckschicht belegt ist, die Korrosionsschutzschicht Licht und Wärmestrahlung regelmäßig um mehr als 90 % reflektiert, d. h. einen Absorptionsgrad von weniger als 10 % aufweisen. Indem durch den erfindungsgemäßen Auftrag einer Deckschicht ein Absorptionsgrad von größer als 50 % erreicht wird, wird somit deutlich mehr Wärme von dem Stahlflachprodukt aufgenommen und so der für das Erwärmen anfallende Zeit- und Energiebedarf ebenso deutlich vermindert.

Einen positiven Einfluss auf die Minimierung des Zeit- und Energiebedarfs hat es in diesem Zusammenhang auch, dass einige der erfindungsgemäß für die Deckschicht vorgesehenen metallischen Verbindungen unter Wärmeeinfluss ihre Farbe ändern und dadurch ein noch besseres Absorptionsverhalten zeigen. Hier erweist es sich als besonders günstig, dass sich die erfindungsgemäß für die Deckschicht vorgesehenen Verbindungen besonders für eine Schnellaufheizung eignen, da sich ihr Absorptionsgrad bei hohen Energiedichten und sehr kurzwelliger Wärmestrahlung deutlich verbessert.

Der Absorptionsfaktor $\varepsilon$ (< 1) wird bestimmt durch die chemische Beschaffenheit der Substanz und zwar in der Form, dass die Moleküle im gewünschten Wellenlängenbereich möglichst viel Strahlungsenergie in Schwingungen (Phononen) umsetzen oder durch Versatz der äußeren Elektronen Energie aufgenommen wird (schon sichtbarer IR-Bereich > 600 °C).

Die übertragbare Wärmemenge wird auch bestimmt durch die Oberflächenmorphologie und somit von der Rauhigkeit des jeweiligen Substrats. Aus der nachfolgend wiedergegebenen Formel folgt, dass eine erhöhte Rauhigkeit eine größere Oberfläche und damit eine bessere Energieaufnahme ergibt:

$$Q = \sigma \cdot \varepsilon \cdot A \cdot (T_s{}^4 - T_\infty{}^4)$$

mit

Q: Wärmestrom durch Strahlung

$\sigma$: Stefan-Boltzman-Konstante = 5,67 $*10^{-8}$ W/ m$^2$ K

$\varepsilon$: Emissionsgrad, $0 \leq \varepsilon \leq 1$

A: Oberfläche des bestrahlten Körpers

$T_s$: Oberflächentemperatur in K

$T_\infty$: Umgebungstemperatur in K

Unter Berücksichtigung des Absorptionsfaktors nimmt demnach die aufgenommene Energie in der vierten Potenz zur Temperatursteigerung zu. Betrachtet man eine dünne Schicht, die sehr viel dünner ist als die Wellenlänge von 2 - 3 $\mu$m, so nimmt hier die absorbierte Energie immer noch in der dritten Potenz zur Temperatursteigerung zu. Das Stahlflachprodukt erwärmt sich aufgrund der stationären Wärmeleitung von der Deckschicht zum darunter liegenden Substrat des Stahlflachprodukts, insbesondere jedoch aufgrund der stark reduzierten Reflektion von Wärmestrahlung.

Wenn die Deckschichtdicke geringer ist als die Wellenlänge, erwärmt der nicht reflektierte Strahlungsanteil direkt das unter der Deckschicht liegende Substrat. Somit ist der Effekt der besseren Erwärmbarkeit nicht zuerst von der Schichtdicke, sondern vor allem von den Absorptionseigenschafen der Deckschicht abhängig. Deckschichten mit einer Dicke von nur 0,1 $\mu$m bringen hier bereits messbare Vorteile.

Der Absorptionsgrad verschiedener Stoffe liegt in der Bandstruktur des Materials, bei dem die Photonen bestimmter Energie (IR-Spektrum) Moleküle anregen, die Quantenübergänge mit genau dieser Energiedifferenz in ihren Molekülschwingungen besitzen. Die meisten metallischen Salze zeichnen sich zusätzlich zu ihrer hohen Temperaturstabilität auch dadurch aus, dass sie, appliziert als Pigment geringer Teilchengröße, einen hohen Absorptionsgrad für Licht im sichtbaren und nahinfraroten (IR-A und IR-B) Wellenlängenbereich besitzen.

In Tabelle 2 sind für einige Substanzen, aus denen die erfindungsgemäß vorgesehene Deckschicht gebildet sein kann, die gemessenen Absorptionskoeffizienten bei NIR-Strahlung angegeben.

Optimierte Absorptionsergebnisse können mit einer Deckschicht erzielt werden, die wie folgt beschaffen und erzeugt ist:

a) Zur Erzeugung der Deckschicht applizierte Beschichtungsflüssigkeit:

- Feststoffanteil an anorganischen, bis 900 °C temperaturbeständigen Komponenten: 5 - 45 Gew.-%, insbesondere 20 - 35 Gew.-%;

- Anteil an einem bis 900 °C temperaturbeständigen Binder, insbesondere an einem Binder auf Silikatbasis: 1 - 15 Gew.-%, insbesondere 7 - 12 Gew.-%;

- Lösemittelanteil (Wasser): 50 - 94 Gew.-%, insbesondere 30 - 75 %;

- Feststoffbeschaffenheit: 0,05 - 1 $\mu$m Teilchengröße, eine Teilchengröße im Bereich der Trockenschichtdicke ergibt eine optimale Rauhigkeit der Beschichtung.

b) Schichtdicke der erhaltenen Deckschicht

- 0,1 - 0,3 $\mu$m, da unter 0,05 $\mu$m keine spezifischen Absorptionseigenschaften mehr einstellbar sind, jedoch bei Schichtdicken über 0,5 $\mu$m der direkte Übergang der IR-Strahlung in den metallischen Schutzüberzug abnimmt.

c) Trocknung der als Nassschicht applizierten Deckschicht

- Temperaturbereich: 120 - 1000 °C. Der große Temperaturbereich ist möglich, da keine Vernetzung und kaum temperaturbedingte Reaktionen der Beschichtung stattfinden. Eine möglichst schnelle Trocknung erhöht die Rauhigkeit und damit die Absorptionsfähigkeit für IR-Wellen. Die Applizierung der Schicht kann daher auch direkt vor dem Warmumformprozess erfolgen.

d) Rauhigkeit der erhaltenen Deckschicht: Ra = 1,0 - 2,0 $\mu$m

Nachfolgend wird die Erfindung anhand von Versuchsergebnissen näher erläutert:

Versuch 1 (nicht erfindungsgemäß):

Im Schmelztauchverfahren mit einem 20 $\mu$m dicken, vor Korrosion schützenden AlSi-Korrosionsschutzüberzug beschichtete, aus dem Stahl 28MnB5 bestehende Stahlplatinen sind zeitlich und örtlich im unmittelbaren Anschluss an die Erzeugung des Korrosionsschutzüberzugs zur Erzeugung einer erfindungsgemäßen Deckschicht mit einer Beschichtungsflüssigkeit besprüht worden. Die Beschichtungsflüssigkeit enthielt neben Wasser 25 Gew.-% eines als Zinksulfid vorliegenden, die gewünschte Oberflächenbeschaffenheit bewirkenden Sulfids und zur Anbindung der Deckschicht an den Korrosionsschutzüberzug als Binder 7 Gew.-% Silikate. Die Dicke der Nassschicht ist dabei so eingestellt worden, dass nach einer im Durchlauf innerhalb von 2 sec mittels eines NIR-Trockners absolvierten Trocknung eine Deckschicht erhalten worden ist, die bei einem Beschichtungsgewicht der Deckschicht von 1 g/m$^2$ je Seite 0,2 $\mu$m dick war.

Die so beschichteten Platinen erreichten im Erwärmungsofen, durch den sie im Durchlauf über Keramikrollen gefördert worden sind, innerhalb von 190 sec die Solltemperatur von 890 °C. Die Erwärmungszeit war damit ca. 50 sec kürzer als die Zeit, die für die Erwärmung einer nur mit dem AlSi-Korrosionsschutzüberzug beschichteten Platine ohne die erfindungsgemäße Deckschicht benötigt wird. Es zeigte sich zudem, dass es zu weniger Ablagerungen an den Keramikrollen des Erwärmungsofens kam. Aus der derart erwärmten, erfindungsgemäß mit einer Deckschicht versehenen Platine wurde durch Warmpressformen und anschließende Härtung ein Bauteil geformt, das ein martensitisches Grundgefüge aufwies und das ohne weitere Reinigung oder Strahlung schweißbar und lackierbar war.

Versuch 2 (nicht erfindugsgemäß)

Im Schmelztauchverfahren mit einem 25 $\mu$m dicken, vor Korrosion schützenden AlSi-Schutzüberzug beschichtete, aus dem Stahl 22MnB5 bestehende Stahlplatinen sind zeitlich und örtlich im unmittelbaren Anschluss an die Erzeugung des Schutzüberzugs in Line mittels eines konventionellen Coilcoaters zur Erzeugung einer erfindungsgemäßen Deckschicht mit einer Beschichtungsflüssigkeit beschichtet worden. Die Beschichtungsflüssigkeit enthielt neben Wasser 5 Gew.-% eines die gewünschte Beschaffenheit der Deckschicht bewirkenden Fluorids eines unedlen Metalls in Form von Hexafluortitansäure und als Binder zur Anbindung der Deckschicht an den metallischen Schutzüberzug 7 Gew.-% Siloxane.

Die so aufgebrachte Nassschicht ist anschließend in einem NIR-Trockner und einer konvektiven Haltestrecke getrocknet worden. Dabei wurde die Dicke der Nassschicht so eingestellt, dass sich eine trockene Deckschicht mit einer Dicke von 0,02 $\mu$m und einem Belegungsgewicht von 40 mg/m$^2$ je Seite ergab. Die Trocknung erfolgte im Durchlauf in einer Zeit von 5 sec.

Die so beschichteten Platinen ließen sich im Erwärmungsofen in 180 sec auf 900 °C erwärmen. Diese Erwärmungszeit war 50 sec kürzer als die Zeit, die für die Erwärmung einer nur mit einem AlSi-Korrosionsschutzüberzug versehenen Platinen ohne die erfindungsgemäße Deckschicht benötigt worden ist. Es zeigte sich zudem, dass es zu weniger Ablagerungen an den Rollen des Keramikofens kam, in dem die Erwärmung vorgenommen worden ist. Des Weiteren stellt sich heraus, dass sich die erfindungsgemäß mit der Deckschicht beschichteten Platinen problemlos durch Warmpressformen mit anschließender Härtung zu einem Bauteil mit martensitischem Grundgefüge formen ließen, das ohne weitere Reinigung oder Strahlung schweißbar und lackierbar war.

Versuch 3

Im Schmelztauchverfahren mit einem 15 $\mu$m dicken, vor Korrosion schützenden AlSi-Korrosionsschutzüberzug beschichtete, aus dem Stahl 22MnB5 bestehende Stahlplatinen sind zeitlich und örtlich im unmittelbaren Anschluss an die Erzeugung des Korrosionsschutzüberzugs in Line zur Erzeugung einer erfindungsgemäßen Deckschicht mittels eines Walzenauftragsverfahren mit einer Beschichtungsflüssigkeit belegt worden. Die Beschichtungsflüssigkeit enthielt Wasser und erfindungsgemäß jeweils 10 Gew.-% Ruß und Graphit sowie als die gewünschte Oberflächenbeschaffenheit bewirkende Hydroxid- Verbindung 10 Gew.-% Natriumhydroxid und 5 Gew.-% eines alkalisch-silikatischen Binders.

Die Deckschicht wurde als Nassschicht mit einer Belegungsdichte von 250 mg/m$^2$ aufgebracht, was bei einer Dichte von 2,2 g/cm$^3$ einer Deckschichtdicke von ca. 0,1 $\mu$m im Nasszustand entspricht. Die so aufgetragene Deckschicht ist anschließend in einem konvektiven Trockner bei 250 °C getrocknet worden, wodurch die Schichtdicke der Deckschicht auf 0,01 $\mu$m im fertig getrockneten Zustand reduziert wurde. Die Trocknung erfolgte im Durchlauf in einer Zeit von 30 sec. Im Zuge der Trocknung schlug die Farbe der Deckschicht zu einem dunkleren Farbton um, durch den das Wärmeabsorptionsvermögen der Deckschicht weiter erhöht wurde.

Die mit der Deckschicht beschichteten Platinen ließen sich im Erwärmungsofen in 170 sec auf 900 °C erwärmen und benötigten somit ca. 70 sec weniger Erwärmungszeit als mit einer AlSi-Beschichtung versehene Platinen, die nicht in erfindungsgemäßer Weise mit einer Deckschicht belegt worden sind. Dabei bestätigte auch dieser Versuch, dass es durch die Deckschicht zu deutlich weniger Ablagerungen an den Rollen kam, auf denen die Platinen durch den Erwärmungsofen gefördert worden sind. Anhaftungen im Werkzeug wurden bei den erfindungsgemäß beschichteten Platinen ebenfalls nicht beobachtet, wogegen bei den konventionellen, nicht mit der Deckschicht versehenen beschichteten Platinen sich entsprechende Ablagerungen und Anhaftungen einstellten. Das nach dem Warmpressformen erhaltene Bauteil wies ein vollständig martensitisches Grundgefüge und einen in der erwarteten Weise legierten Überzug auf. Die auf der Oberfläche verbleibende Deckschicht führt zu keiner Verschlechterung der KT-Lackierbarkeit ("KT" = Kathodische Tauchlackierung). Ebenso wies das erhaltene Bauteil hervorragende Punktschweißeigenschaften auf.

Versuch 4 (nicht erfindungsgemäß)

Im Schmelztauchverfahren mit einem 20 $\mu$m dicken, vor Korrosion schützenden AlSi-Schutzüberzug beschichtete, aus dem 22MnB5- Stahl bestehende Stahlplatinen sind zur Erzeugung einer erfindungsgemäßen Deckschicht im kontinuierlichen Durchlauf im Anschluss an die Erzeugung des Schutzüberzugs in Line mittels Sprühauftrag mit einer Beschichtungsflüssigkeit belegt worden. Die Beschichtungsflüssigkeit enthielt Wasser und 15 Gew.-% eines Carbonats eines Erdalkalimetalls in Form von Kalziumcarbonat (CaCO$_3$) sowie als Binder zur Anbindung der Deckschicht an den metallischen Schutzüberzug weitere 8 Gew.-% Kieselsäure.

Die als Nassschicht aufgebrachte Deckschicht ist anschließend in einem NIR-Trockner mit anschließender konvektiver Haltestrecke getrocknet worden. Beim Auftrag wurde die Dicke der Nassschicht so eingestellt, dass sich nach dem Trocknen eine Deckschicht mit einer Dicke von 0,18 $\mu$m und einem Belegungsgewicht von 500 mg/m$^2$ je Seite ergab. Die Trocknung erfolgte im Durchlauf in einer Zeit von 10 sec.

Die so beschichteten Platinen sind im Erwärmungsofen innerhalb von 195 sec auf 900°C erwärmt worden. Die für diese Erwärmung benötigte Zeit war um ca. 45 sec kürzer als die Zeit, die zur Erwärmung von konventionell mit einer AlSi-Schutzschicht, jedoch nicht mit einer erfindungsgemäßen Deckschicht beschichteten Platinen benötigt wird.

Im Zuge der Erwärmung der erfindungsgemäß beschichteten Platinen zeigten sich keinerlei Ablagerungen an den Rollen des für die Erwärmung eingesetzten Durchlaufofens. Anhaftungen im Werkzeug wurden ebenso wenig beobachtet. Das nach der Warmpressformhärtung aus der erfindungsgemäß beschichteten Platine erhaltene Bauteil wies ein vollständig martensitisches Grundgefüge und die erwartete Legierung im Überzug auf. Die auf der Oberfläche verbliebenen Reste der Deckschicht führten zu keiner Verschlechterung der KT-Lackierbarkeit und auch die geforderten Punktschweißeigenschaften wurden erreicht.

Versuch 5 (nicht erfindungsgemäß)

Im Schmelztauchverfahren mit einem 15 $\mu$m dicken, vor Korrosion schützenden AlSi-Schutzüberzug beschichtete, aus dem Stahl 34MnB5 bestehende Stahlplatinen sind zur Erzeugung einer Deckschicht auf dem Schutzüberzug in line in zeitlich und örtlich unmittelbarem Anschluss an die Erzeugung des Schutzüberzugs durch Tauchen in eine Beschichtungsflüssigkeit mit einer Deckschicht versehen worden. Die Beschichtungsflüssigkeit enthielt neben Wasser in erfindungsgemäßer Weise 22 Gew.-% eines Sulfids eines unedlen Metalls in Form von Zinn(II)sulfid (SnS) und als Binder zur Anbindung der Deckschicht an den metallischen Schutzüberzug weitere 5 Gew.-% Siloxane.

Die so als Nassschicht mit einem Belegungsgewicht von 4 g/m$^2$ je Seite aufgebrachte Deckschicht ist in einem NIR-Trockner getrocknet worden. Durch die Trocknung stellte sich eine Trockenschicht mit einem Belegungsgewicht von. 1,5 g/m$^2$ je Seite ein. Die Trocknung erfolgte im Durchlauf in einer Zeit von 6 sec.

Die in dieser Weise mit der Deckschicht versehenen Platinen ließen sich im Erwärmungsofen in 190 sec auf 890 °C erwärmen und benötigten somit ca. 50 sec weniger Zeit als in konventioneller Weise mit einem AlSi-Korrosionsschutz beschichtete, jedoch nicht mit einer erfindungsgemäßen Deckschicht versehene Platinen. Weder bei der Erwärmung im Durchlaufofen noch bei der anschließenden Warmpressformhärtung kam es zu Anhaftungen von Beschichtungsmaterial an einem Bauteil des Ofens oder des Pressformwerkzeugs. Die erhaltenen, aus den in erfindungsgemäßer Weise beschichteten Platinen warmpressgeformten und gehärteten Bauteile wiesen wie die bei den anderen Versuchen erhaltenen Bauteile ein martensitisches Gefüge ihres Grundwerkstoffs auf und ließen sich ohne weitere Reinigung oder Strahlung verschweißen und lackieren.

Versuch 6

Zur Erzeugung einer Deckschicht sind im Schmelztauchverfahren mit einem 25 $\mu$m dicken, vor Korrosion schützenden AlSi-Schutzüberzug beschichtete, aus dem 22MnB5-Stahl bestehende Stahlplatinen im unmittelbaren Anschluss an die Beschichtung mit dem Schutzüberzug in Line mittels Sprühauftrag mit einer Beschichtungsflüssigkeit belegt worden. Die Beschichtungsflüssigkeit enthielt Wasser und erfindungsgemäß 12 Gew.-% eines Carbonats eines Alkalimetalls in Form von Kaliumcarbonat (K$_2$CO$_3$). Zusätzlich enthielt die Beschichtungsflüssigkeit als Binder zur Anbindung der Deckschicht an den metallischen Schutzüberzug weitere 6 Gew.-% Na$_2$O-SiO$_2$.

Die so aufgebrachte Nassschicht ist anschließend in einem NIR-Trockner mit konvektiver Haltestrecke getrocknet worden. Dabei wurde die Dicke der Nassschicht so eingestellt, dass sich eine Deckschicht mit einem Belegungsgewicht von 250 mg/m$^2$ je Seite im getrockneten Zustand ergab, was bei einer Dichte von 2,5 g/cm$^3$ einer Schichtdicke von 0,1 - 0,15 $\mu$m pro Seite entspricht. Die Trocknung erfolgte im Durchlauf in einer Zeit von 10 sec.

Die so beschichteten Platinen ließen sich im Erwärmungsofen in 190 sec auf 900 °C erwärmen und benötigten somit ca. 50 sec weniger Zeit als mit AlSi-beschichtete Platinen ohne zusätzliche erfindungsgemäße Beschichtung. Es zeigte sich auch hier, dass es zu keinerlei Ablagerungen an den Keramikofenrollen des Erwärmungsofens kam. Anhaftungen im zur Warmpressformhärtung eingesetzten Werkzeug traten im Gegensatz zu der Verarbeitung der nur mit einem AlSi-Überzug versehenen, nicht mit einer erfindungsgemäßen Deckschicht ausgestatteten Platinen allenfalls in sehr geringem Umfang auf.

Eine verwertbare Beschleunigung der Aufheizphase in IR-Strahlung emittierenden Aufheizsystemen zeigt sich somit bei allen erfindungsgemäß aufgetragenen Deckschichten bereits bei Schichtdicken, die 0,01 - 0,2 $\mu$m betragen. Dies bringt folgende Vorteile mit sich:

1. Die Deckschicht muss zu keinem Zeitpunkt des Verarbeitungsprozesses entfernt werden.

2. Aufgrund der geringen Trocknungszeiten ist eine inline erfolgende, d. h. in den Wärmbehandlungsprozess unterbrechungsfrei eingebundene Applikation möglich.

3. Die Beschichtungskosten sind aufgrund der geringen benötigten Mengen an Beschichtungsflüssigkeit gering.

4. Die Schweißfähigkeit der aus erfindungsgemäß beschichteten Stahlflachprodukten geformten Bauteile wird durch die Deckschicht nicht beeinflusst.

5. Übliche Reinigungsverfahren werden durch die Bestandteile der Deckschicht nicht kontaminiert.

6. Die Lackierbarkeit eines erfindungsgemäß beschichteten Stahlflachprodukts bzw. eines daraus geformten Bauteils ist vergleichbar mit der Lackierbarkeit von Produkten, die Stahlflachprodukten geformt sind, die keine erfindungsgemäße Deckschicht aufweisen.

7. Bei eisenhaltigen Überzügen oder mit einer nicht metallischen Schicht versehenen Stahlflachprodukten ergibt die erfindungsgemäße Deckschicht einen sekundären Korrosionsschutz. Dies gilt insbesondere dann, wenn die Deckschicht aus oxidischen Verbindungen gebildet ist.

8. Im Fall, dass das Stahlflachprodukt mit einem metallischen Korrosionsschutz überzogen ist, minimiert die erfindungsgemäß aufgetragene Deckschicht die Entstehung von Abrieb und Anhaftungen.

Tabelle 1

| Kurzzeichen | Basis des Überzugs | Wirksame Gehalte an anderen Elementen im Überzug [Gew. -%] | Beschichtungsverfahren | Verkürzung der Aufheizzeit [%] |
|---|---|---|---|---|
| AS | Al | Si: 8 - 12 | schmelztauchbeschichtet | 20 - 30 |
| Z | Zn | Al: 0,1 - 0,2 | schmelztauchbeschichtet | 25 - 35 |
| ZF | Zn | Fe: 8 - 15 | schmelztauchbeschichtet, diffusionsgeglüht | 0 - 10 |
| ZN | Zn | Ni: 8 - 12 | Galvanisch beschichtet | 10 - 20 |
| ZA | Zn | Al: 5 | schmelztauchbeschichtet | 25 - 35 |
| AZ | Al | Zn: 43,4 Si: 1,6 | schmelztauchbeschichtet | 25 - 35 |
| ZM | Zn | Mg: 0,5 - 5 Al: 0,2 - 3 | schmelztauchbeschichtet | 10 - 20 |

Tabelle 2

| Absorptionsfaktor | Bezeichnung | Formel |
|---|---|---|
| 0,2 - 0,3 | Aluminiumoxid | $Al_2O_3$ |
| 0,2 - 0,3 | Titanoxid | $TiO_2$ |
| 0,3 - 0,4 | Zinkoxid | $ZnO$ |
| 0,4 - 0,5 | Magnesiumoxid | $MgO$ |
| 0,4 - 0,6 | Siliziumoxid | $SiO_2$ |
| 0,5 - 0,7 | Soda (calziniert) | $Na_2CO_3$ |
| 0,6 - 0,7 | Titanfluorid | $TiF_3$ |
| 0,6 - 0,7 | Pottasche | K2CO3 |
| 0,7 - 0,8 | Kalkstein | CaCO3 |
| 0,7 - 0,8 | Gips | Ca[SO4]•2H2O |
| 0,85 | Titan-Spinell | TiMg2O4 |

**Patentansprüche**

1. Stahlflachprodukt, das für eine Wärmebehandlung vorgesehen ist, wobei das Stahlflachprodukt eine aus Stahl bestehende Grundschicht und eine auf die Grundschicht aufgetragene, vor Korrosion schützende Schutzschicht auf Aluminiumbasis umfasst und wobei eine separate Deckschicht auf die Schutzschicht aufgetragen ist, **dadurch gekennzeichnet,**

   - **dass** die separate Deckschicht, die mindestens auf die Schutzschicht, als eine der freien Oberflächen des Stahlflachprodukts, aufgetragen ist, wenigstens eine Oxid-, Nitrid-, Sulfid-, Sulfat-, Carbid-, Carbonat-, Fluorid-, Hydrat-, Hydroxid- oder Phosphat-Verbindung eines unedlen Metalls enthält, das der Gruppe "Na, K, Mg, B, Mn" angehört,
   - **dass** das Belegungsgewicht der Deckschicht 0,01 - 15 g/m$^2$ beträgt,
   - **dass** die Schichtdicke der Deckschicht 0,01 $\mu$m - bis weniger als 0,5 $\mu$m beträgt,
   - **dass** die Deckschicht einen Absorptionsgrad für Wärmestrahlung aufweist, der im Bereich von 0,3 - 0,99 % liegt,
   - **dass** die in der Deckschicht vorhandene Verbindung partikelförmig vorliegt
   und
   - **dass** der mittlere Durchmesser der Partikel der Verbindung 0,01 - 0,3 $\mu$m beträgt.

2. Stahlflachprodukt nach Anspruch 1, **dadurch gekennzeichnet, dass** die Deckschicht bis zu 15 Gew.-% Ruß oder Graphit enthält.

3. Verfahren zum Herstellen eines gemäß einem der voranstehenden Ansprüche beschaffenen Stahlflachproduktes, umfassend folgende Arbeitsschritte:

   a) Bereitstellen eines Stahlflachproduktes, das eine aus Stahl bestehende Grundschicht und eine auf die Grundschicht aufgetragene, vor Korrosion schützende Schutzschicht auf Basis von Al umfasst,
   b) Aufbringen einer Deckschicht mindestens auf die Schutzschicht, als eine der freien Oberflächen des Stahlflachprodukts durch
   b.1) Auftragen einer Beschichtungsflüssigkeit auf mindestens die Schutzschicht, als eine der freien Oberflächen des Stahlflachprodukts, wobei die Beschichtungsflüssigkeit zu (in Gew.-%) 5 - 50 % aus einer Oxid-, Nitrid-, Sulfat-, Sulfid-, Carbid-, Carbonat-, Fluorid-, Hydrat-, Hydroxid- oder Phosphat-Verbindung eines unedlen Metalls, das der Gruppe "Na, K, Mg, B, Mn" angehört, sowie zu 1 - 20 % aus einem Binder und als Rest aus Wasser besteht, wobei in der Beschichtungsflüssigkeit zusätzlich bis zu 15 Gew.-% Ruß oder Graphit vorhanden sein können und wobei die in der Deckschicht vorhandene Verbindung partikelförmig vorliegt und der mittlere Durchmesser der Partikel der Verbindung 0,01 - 0,3 $\mu$m beträgt,
   b.2) Einstellen der Dicke der Deckschicht derart, dass ihre Dicke nach dem Trocknen (Arbeitsschritt c)) 0,01 $\mu$m bis weniger als 0,5 $\mu$m beträgt
   und
   c) Trocknen der Deckschicht bei einer Trocknungstemperatur von 100 - 300 °C und einer Trocknungszeit von 5 - 180 sec.

4. Verfahren nach Anspruch 3, **dadurch gekennzeichnet, dass** die Beschichtungsflüssigkeit 5 - 35 Gew.-% der Verbindung des unedlen Metalls enthält.

5. Verfahren nach Anspruch 3 oder 4, **dadurch gekennzeichnet, dass** die Beschichtungsflüssigkeit 2 - 10 Gew.-% eines Binders enthält.

6. Verfahren nach einem der Ansprüche 3 bis 5, **dadurch gekennzeichnet, dass** die Beschichtungsflüssigkeit 30 - 94 Gew.-% Wasser als Lösemittel enthält.

7. Verfahren nach einem der Ansprüche 3 bis 6, **dadurch gekennzeichnet, dass** die Arbeitsschritte des Verfahrens in einer kontinuierlichen Abfolge unterbrechungsfrei ausgeführt werden.

8. Verfahren nach einem der Ansprüche 3 bis 7, **d**adurch gekennzeichnet, dass das gemäß Arbeitsschritt a) bereitgestellte Stahlflachprodukt eine aus einem Band oder Blech geschnittene Platine ist, **dass** das Stahlflachprodukt im Anschluss an die Trocknung der Deckschicht ausgehend von der Trocknungstemperatur auf eine für eine Warmformung benötigte Umformtemperatur erwärmt wird und **dass** das auf die Umformtemperatur erwärmte Stahlflachprodukt zu dem Bauteil warmgeformt wird.

9. Verfahren nach Anspruch 8, **dadurch gekennzeichnet, dass** das umgeformte Bauteil von der Umformtemperatur beschleunigt abgekühlt wird, um in dem Bauteil Härtegefüge zu erzeugen.

**Claims**

1. A steel flat product intended for heat treatment, wherein the steel flat product comprises a base layer consisting of steel and an aluminium based protective layer which is applied to the base layer and which protects against corrosion, and wherein a separate top layer is applied to the protective layer, **characterized in that**

   - the separate top layer, which is applied at least to the protective layer, as one of the free surfaces of the steel flat product, contains at least one oxide , nitride , sulphide, sulphate, carbide, carbonate, fluoride, hydrate, hydroxide or phosphate compound of a base metal belonging to the group "Na, K, Mg, B, Mn",
   - the surface weight of the finishing coat is between 0.01 and 15 g/m$^2$,
   - the coating thickness is between 0.01 and 5 $\mu$m,
   - the coating layer has an absorption level for heat radiation, that is in the range of 0.3 and 0.99 %,
   - the compound present in the finishing coat is particulate,
   and
   - the average diameter of the particles of the compound is 0.01 to 0.3 $\mu$m.

2. Flat steel product according to anyone of the preceding claims, **characterised in that** the finishing coat contains up to 15% wt. of carbon black or graphite.

3. Method for producing a flat steel product procured as per any one of the preceding claims, comprising the following steps:

   a) Providing a steel flat product comprising a base layer consisting of steel and a protective layer based on Al which is applied to the base layer and protects against corrosion,
   b) Application of a top layer at least to the protective layer, as one of the free surfaces of the steel flat product, by
   b.1) applying a coating liquid to at least the protective layer, the coating liquid consisting of (in wt.-%) 5 to 50 % of an oxide, nitride, sulphate, sulphide, carbide, carbonate, fluoride, hydrate, hydroxide or phosphate compound of a base metal belonging to the group "Na, K, Mg, B, Mn" and 1 to 20 % of a binder and water as the remainder, wherein up to 15 % wt.-% of carbon black or graphite may additionally be present in the coating liquid, and wherein the compound present in the top layer is particulate and the average diameter of the particles of the compound is 0.01 to 0.3$\mu$m,
   b.2) adjusting the thickness of the top layer such that its thickness after drying (step c)) is from 0.01 $\mu$m to less than 0.5 $\mu$m
   and
   c) drying the top layer at a drying temperature of 100 - 300 °C and a drying time of 5 - 180 sec.

4. Method according to claim 3, **characterised in that** the coating liquid contains 5 - 35 wt.% of the base metal compound.

5. Method according to claim 3 or 4, **characterized in that** the coating liquid contains 2 - 10 wt.% of a binder.

6. Method according to any one of claims 3 to 5, **characterized in that** the coating liquid contains 30 - 94 wt.% of water as solvent.

7. Method according to any one of claims 3 to 6, **characterized in that** the working steps of the process are carried out in a continuous sequence without interruption.

8. Method according to any one of claims 3 to 7, **characterized in that** the steel flat product provided according to step a) is a blank cut from a strip or sheet, **in that** the steel flat product is heated subsequently to the drying of the top layer starting from the drying temperature to a forming temperature required for hot forming, and **in that** the steel flat product heated to the forming temperature is hot formed into the component.

9. Method according to claim 8, **characterized in that** the formed component is rapidly cooled from the deformation temperature in order to produce a martensitic structure in the component.

**Revendications**

1. Produit plat en acier destiné au traitement thermique, le produit plat en acier comprenant une couche de base constituée d'acier et une couche de protection à base d'aluminium qui est appliquée sur la couche de base et protège contre la corrosion, et une couche de revêtement séparée étant appliquée sur la couche de protection, **caractérisé**

   - **en ce que** la couche de revêtement séparée, qui est appliquée au moins sur la couche de protection comme l'une des surfaces libres du produit plat en acier, contient au moins un composé d'oxyde, de nitrure, de sulfure, de sulfate, de carbure, de carbonate, de fluorure, d'hydrate, d'hydroxyde ou de phosphate d'un métal commun appartenant au groupe "Na, K, Mg, B,Mn",
   - **en ce que** le poids de répartition de la couche de revêtement est de 0,01 à 15 $g/m^2$,
   - **en ce que** l'épaisseur de la couche de revêtement est de 0,01 $\mu$m - à moins de 0,5 $\mu$m,
   - **en ce que** la couche de revêtement a un degré d'absorption pour le rayonnement thermique qui se situe entre 0,3 et 0,99 %,
   - **en ce que** le composé présent dans la couche de revêtement est sous forme de particules, et
   - **en ce que** le diamètre moyen des particules du composé est de 0,01 à 0,3 $\mu$m.

2. Produit en acier plat selon la revendication 1,
   **caractérisé en ce que** la couche de revêtement contient jusqu'à 15 % en poids de noir de carbone ou de graphite.

3. Procédé de fabrication d'un produit plat en acier selon l'une quelconque des revendications précédentes, comprenant les étapes suivantes :

   a) mise à disposition d'un produit plat en acier comprenant une couche de base constituée d'acier et une couche de protection à base d'Al et protégeant contre la corrosion appliquée sur la couche de base,
   b) application d'une couche de revêtement sur au moins la couche de protection, comme l'une des surfaces libres du produit plat en acier, par

   b.1) application d'un liquide de revêtement sur au moins la couche de protection, comme l'une des surfaces libres du produit plat en acier, où le liquide de revêtement consiste (en % en poids) à 5 à 50 % d'un composé d'oxyde, de nitrure, de sulfate, de sulfure, de carbure, de carbonate, de fluorure, d'hydrate, d'hydroxyde ou de phosphate d'un métal de base appartenant au groupe "Na, K, Mg, B, Mn", ainsi qu'à 1 à 20 % d'un liant et le reste d'eau, où jusqu'à 15 % en poids de noir de carbone ou de graphite peuvent être en outre présents dans le liquide de revêtement, et où le composé présent dans la couche de revêtement est présent sous forme de particules et le diamètre moyen du composé est de 0,01 à 0,3 $\mu$m,
   b.2) ajustement de l'épaisseur de la couche de revêtement de sorte que son épaisseur après séchage (étape c)) est de 0,01 à moins de 0,5 $\mu$m

   et
   c) séchage de la couche de revêtement à une température de 100 à 300 °C et un temps de séchage de 5 à 180 secondes.

4. Procédé selon la revendication 3,
   **caractérisé en ce que** le liquide de revêtement contient 5 à 35 % en poids du composé de métal commun.

5. Procédé selon la revendication 3 ou 4,
   **caractérisé en ce que** le liquide de revêtement contient 2 à 10 % en poids d'un liant.

6. Procédé selon l'une des revendications 3 à 5,
   **caractérisé en ce que** le liquide de revêtement contient 30 à 94 % en poids d'eau comme solvant.

7. Procédé selon l'une des revendications 3 à 6,
   **caractérisé en ce que** les étapes du procédé sont réalisées dans une séquence continue sans interruption.

**8.** Procédé selon l'une des revendications 3 à 7,
**caractérisé**

- **en ce que** le produit plat en acier mis à disposition selon l'étape de travail a) est une platine découpée à partir d'une bande ou d'une feuille,
- **en ce que** le produit plat en acier est chauffé, après le séchage de la couche de revêtement, en partant de la température de séchage jusqu'à une température de formage nécessaire pour un formage à chaud, et
- **en ce que** le produit plat en acier chauffé à la température de formage est formé à chaud pour devenir le composant.

**9.** Procédé selon la revendication 8,
**caractérisé en ce que** le composant formé est refroidi de manière accélérée à partir de la température de formage pour produire des microstructures durcies dans le composant.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1143029 B1
- DE 102006053819 A1
- DE 102008027460 A1
- EP 1439240 A1
- WO 2007076769 A2

- EP 1451383 A1
- JP 6411983 A
- JP H04176878 A
- JP S6411983 A
- JP H04176868 A